# EUROPEAN PATENT SPECIFICATION

(11) **EP 4 254 550 B1**
(45) Date of publication and mention of the grant of the patent: **25.06.2025**
(21) Application number: 21897477.2
(22) Date of filing: 22.09.2021
(51) Int. Cl.: H01M 4/36, H01M 4/48

(54) **NEGATIVE ELECTRODE ACTIVE MATERIAL FOR NONAQUEOUS ELECTROLYTE SECONDARY BATTERIES, AND NONAQUEOUS ELECTROLYTE SECONDARY BATTERY**
NEGATIVELEKTRODENAKTIVMATERIAL FÜR SEKUNDÄRBATTERIEN MIT WASSERFREIEM ELEKTROLYT UND SEKUNDÄRBATTERIE MIT WASSERFREIEM ELEKTROLYT
MATÉRIAU ACTIF D'ÉLECTRODE NÉGATIVE POUR BATTERIES SECONDAIRES À ÉLECTROLYTE NON AQUEUX, ET BATTERIE SECONDAIRE À ÉLECTROLYTE NON AQUEUX

(30) Priority: 30.11.2020 JP 2020199051
(43) Date of publication of application: 04.10.2023
(73) Proprietor: Panasonic Intellectual Property Management Co., Ltd., Kadoma-shi, Osaka 571-0057 (JP)
(72) Inventor: SAITO, Yusuke, Kadoma-shi, Osaka 571-0057 (JP); SATO, Yosuke, Kadoma-shi, Osaka 571-0057 (JP); SEKI, Naoki, Kadoma-shi, Osaka 571-0057 (JP)
(74) Representative: Novagraaf International SA
(86) International application number: PCT/JP2021/034841
(87) International publication number: WO 2022/113499

(56) References cited:
- WO-A1-2019/151026
- WO-A1-2020/080452
- WO-A1-2020/110625
- JP-A- 2014 107 013
- JP-A- 2019 220 350
- JP-A- 2020 187 988
- US-A1- 2007 082 294

## Description

### [Technical Field]

The present invention mainly relates to an improvement of a negative electrode active material for a non-aqueous electrolyte secondary battery.

### [Background Art]

Recently, non-aqueous electrolyte secondary batteries because of their high voltage and high energy density have been expected as promising power sources for small consumer applications, power storage devices, and electric cars. With increasing demand for a higher battery energy density, a material containing silicon (Si) that forms an alloy with lithium has been expected to be utilized as a negative electrode active material having a high theoretical capacity density.

However, a material containing silicon, due to its large irreversible capacity, has a disadvantage in that the initial charge-discharge efficiency is low. To address this, various techniques have been proposed for introducing lithium in an amount corresponding to the irreversible capacity, into a material containing silicon. Specifically, it has been proposed to use composite particles containing a lithium silicate phase and silicon particles (fine silicon phase) dispersed in the lithium silicate phase. The silicon particles contribute to the charge-discharge reaction (reversible absorption and release of lithium).

Patent Literature 1 proposes dispersing at least one element Q selected from the group consisting of a rare earth element and an alkaline earth element in the lithium silicate phase of the composite particles. Patent Literature 2 discloses a negative electrode material for lithium ion batteries that contains a composite including crystalline silicon dioxide containing specific components and crystalline silicon.

### [Citation List]

### [Patent Literature]

Patent Literature 1: International Publication WO 2018/179969
Patent Literature 2: Japanese Patent Publication JP 2019-220350 A

### [Summary of Invention]

In the above composite particles, the silicon phase greatly expands and contracts along with absorption and release of lithium during charge and discharge, and a large stress is generated in the silicate phase present around the silicon phase, tending to cause cracking in the silicate phase. Accordingly, a side reaction due to the contact between a newly exposed surface formed by cracking of the silicate phase and the non-aqueous electrolyte is facilitated, and the cycle characteristics tend to deteriorate. In Patent Literature 1, the element Q provides some degree of hardness to the silicate phase, but the suppression of cracking in the silicate phase is still insufficient.

Therefore, the deterioration in cycle characteristics of a secondary battery in which composite particles containing a silicon phase are used as a negative electrode active material is to be solved.

The invention is as set out in the independent claims, further aspects of the invention are outlined in the dependent claims.

In view of the above, one aspect of the present invention relates to a negative electrode active material for a non-aqueous electrolyte secondary battery, including: composite particles containing a lithium silicate phase, a silicon phase dispersed in the lithium silicate phase, and a crystalline phase of silicon dioxide dispersed in the lithium silicate phase, wherein the crystalline phase of silicon dioxide contains β-cristobalite and quartz, and the silicon phase has a crystallite size of 10 nm or less. Another aspect of the present invention relates to a negative electrode active material for a non-aqueous electrolyte secondary battery, including: composite particles containing a lithium silicate phase, a silicon phase dispersed in the lithium silicate phase, and a crystalline phase of silicon dioxide dispersed in the lithium silicate phase, wherein the crystalline phase of silicon dioxide contains β-cristobalite and quartz, and the lithium silicate phase contains at least one element selected from the group consisting of sodium, potassium, magnesium, barium, zirconium, niobium, a lanthanide element, tantalum, vanadium, titanium, phosphorus, bismuth, zinc, tin, lead, antimony, cobalt, fluorine, tungsten, aluminum, and boron

Yet another aspect of the present invention relates to a non-aqueous electrolyte secondary battery, including: a positive electrode; a negative electrode; and an electrolyte, wherein the negative electrode includes the above-described negative electrode active material for a non-aqueous electrolyte secondary battery.

### [Advantageous Effects of Invention]

According to the present invention, it is possible to suppress the deterioration in cycle characteristics of a non-aqueous electrolyte secondary battery.

### [Brief Description of Drawings]

[FIG. 1] A diagram showing examples of XRD patterns of composite particles.
[FIG. 2] A schematic cross-sectional view of a negative electrode active material (composite particles) according to one embodiment of the present invention.
[FIG. 3] A partially cut-away schematic oblique view of a non-aqueous electrolyte secondary battery according to one embodiment of the present invention.

### [Description of Embodiments]

### [Negative electrode active material for non-aqueous electrolyte secondary battery]

A negative electrode active material for a non-aqueous electrolyte secondary battery according to an embodiment of the present invention comprises composite particles containing a lithium silicate phase, a silicon phase dispersed in the lithium silicate phase, and a crystalline phase of silicon dioxide dispersed in the lithium silicate phase (hereinafter sometimes simply referred to as "composite particles"). The crystalline phase of silicon dioxide contains β-cristobalite and quartz. β-cristobalite has a cubic crystal structure, and the Vickers hardness of β-cristobalite is a lower than that of quartz. The silicon phase has a crystallite size of 10 nm or less, and/or the lithium silicate phase contains at least one element selected from the group consisting of sodium, potassium, magnesium, barium, zirconium, niobium, a lanthanide element, tantalum, vanadium, titanium, phosphorus, bismuth, zinc, tin, lead, antimony, cobalt, fluorine, tungsten, aluminum, and boron.

By dispersing silicon dioxide in the silicate phase, the rigidity of the silicate phase is increased to some extent. Furthermore, by allowing β-cristobalite, which has a relatively small hardness, to be co-present with quartz, as the crystalline phase of silicon dioxide, the flexibility of the silicate phase can be improved, and the stress that occurs, when the silicon phase expands, in the silicate phase around the silicon phase is relaxed. As a result of the foregoing, cracking of the silicate phase is suppressed, and the degradation in cycle characteristics due to cracking of the silicate phase is sufficiently suppressed.

When both β-cristobalite and quartz are co-present as the crystalline phase of silicon dioxide, the silicate phase can follow the expansion and the contraction of the silicon phase, so that the function of the silicate phase as the lithium-ion conductive phase is fully maintained during charge and discharge. Therefore, the silicate phase can fully contribute to the charge-discharge reaction, leading to a high capacity and excellent cycle characteristics.

When almost all the silicon dioxide dispersed in the silicate phase is β-cristobalite, the hardness of the silicate phase is reduced, and the silicate phase, during charge, expands considerably along with the expansion of the silicon phase and, during discharge, can hardly follow the contraction of the silicon phase. As a result, gaps are formed between the silicon phase and the silicate phase, causing the silicon phase to be isolated and fail to fully contribute to the charge-discharge reaction, which degrades the cycle characteristics.

When almost all the silicon dioxide dispersed in the silicate phase is quartz, the silicate phase becomes less flexible and less able to follow the expansion of the silicon phase during charge, the stress that occurs in the silicate phase increases, and cracking occurs in the silicate phase, and along therewith, the cycle characteristics are degraded.

In an X-ray diffraction (XRD) pattern of the composite particles obtained by XRD measurement, a peak attributed to the β-cristobalite appears around 2θ = 21.6°, and a peak attributed to the quartz appears around 2θ = 26.3°. For the X ray for the XRD measurement, Kα ray of Cu is used. In the present specification, around x° means, for example, being within the range of x ± 1°.

In the XRD pattern of the composite particles, a ratio I_{A}/I_{B} of an intensity I_{A} of the peak attributed to the β-cristobalite that appears around 2θ = 21.6° to an intensity I_{B} of the peak attributed to the quartz appears around 2θ = 26.3° is preferably 0.1 or more, more preferably 0.3 or more. When the intensity ratio I_{A}/I_{B} is within the above range, the quartz and β-cristobalite are present in a balanced manner in the silicate phase, and the cycle characteristics are tend to be improved. The upper limit of I_{A}/I_{B} is, for example, 2.0.

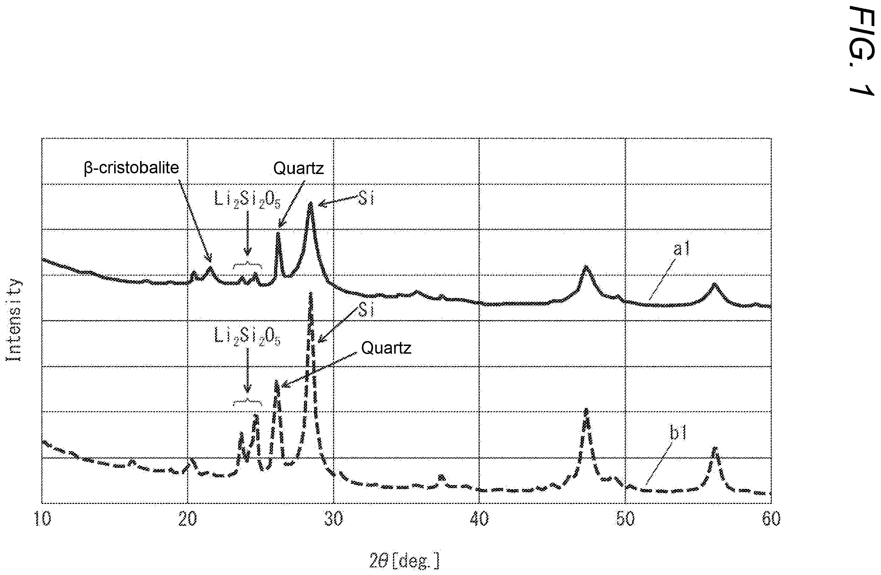

Here, FIG. 1 shows examples of XRD patterns of composite particles. In FIG. 1, a1 shows an XRD pattern of the negative electrode active material (composite particles) of the present embodiment, and b1 shows an XRD pattern of a conventional negative electrode active material (composite particles). The composite particles a1 correspond to later-described Example 1 (Battery A1), and the composite particles b1 correspond to later-described Comparative Example 1 (Battery B1).

In both a1 and b1, a peak attributed to the Si (111) plane of the silicon phase is observed around 2θ = 28°. In both a1 and b1, a peak attributed to Li₂Si₂O₅ of the lithium silicate phase is observed around 2θ = 24°.

In a1, a peak attributed to the quartz and a peak attributed to the β-cristobalite are observed respectively around 2θ = 26.3° and around 2θ = 21.6°. In a1, the above peak intensity ratio I_{A}/I_{B} is 0.3. On the other hand, in b1, a peak attributed to the quartz is observed around 2θ = 26.3°, but no peak attributed to the β-cristobalite is observed around 2θ = 21.6°.

In the composite particles, a plurality of primary particles each containing a lithium silicate phase and a silicon phase are bonded together, constituting a secondary particle. When looking the secondary particle in its entirety, the composite particle has a structure in which a fine silicon phase is dispersed in the lithium silicate phase. By controlling the amount of the silicon phase dispersed in the lithium silicate phase, a further higher capacity can be achieved. The expansion and contraction of the silicon phase can be relaxed by the lithium silicate phase. It is therefore possible to easily achieve both a higher capacity and improved cycle characteristics of the battery.

The composite particle has a structure in which fine silicon dioxide phases are dispersed in the lithium silicate phase. One silicon dioxide phase may contain both β-cristobalite and quartz. A β-cristobalite phase and a quartz phase may be formed individually in the lithium silicate phase.

The average particle diameter of the composite particles (secondary particles) is, for example, 1 µm or more and 25 µm or less, and may be 4 µm or more and 15 µm or less. In the above particle diameter range, the stress that occurs along with the changes in volume of the composite particles during charge and discharge tends to be relaxed, and favorable cycle characteristics are likely to be obtained. The surface area of the composite particles also can be an appropriate size, and the reduction in capacity due to a side reaction with the non-aqueous electrolyte is also suppressed. The average particle diameter of the composite particles means a particle diameter (volume average particle diameter) at 50% cumulative volume in a particle size distribution measured by a laser diffraction scattering method. As the measurement instrument, for example, "LA-750" available from Horiba, Ltd. (HORIBA) can be used. When the surface of the composite particles is covered with a conductive layer, since the thickness of the conductive layer is practically so small as not to influence the average particle diameter of the composite particles, the average particle diameter of the composite particles with the conductive layer may be regarded as the average particle diameter of the composite particles.

The composite particles can be taken out from the battery in the following manner. First, the battery in a fully discharged state is disassembled, to take out the negative electrode, and the negative electrode is washed with anhydrous ethyl methyl carbonate or dimethyl carbonate, to remove the non-aqueous electrolyte component. As described later, the negative electrode has a negative electrode current collector and a negative electrode mixture layer supported on its surfaces. The negative electrode mixture layer is peeled off from the copper foil, and ground in a mortar, to obtain a sample powder. Next, the sample powder is dried in a dry atmosphere for 1 hour, and immersed in a weakly boiled 6M hydrochloric acid for 10 minutes, to remove elements derived from components other than the composite particles. Next, the sample powder is washed with ion-exchanged water, and filtered, followed by drying at 200 °C for 1 hour. This is followed by heating to 900 °C in an oxygen atmosphere to remove the conductive layer, and thus, the composite particles only can be isolated. The fully discharged state means a state in which the depth of discharge (DOD) is 90% or more (the state of charge (SOC) is 10% or less).

### (Lithium silicate phase)

The lithium silicate phase may be amorphous, and may be highly crystalline. The lithium silicate phase with a lower crystallinity is more flexible, can more readily follow the expansion and contraction of the silicon phase, and is less likely to crack. Even when the crystallinity of the lithium silicate phase is high, the lithium silicate phase can have an improved flexibility due to the inclusion of β-cristobalite in the SiO₂ crystal, and become less likely to crack.

The lithium silicate is a silicate containing lithium (Li), silicon (Si), and oxygen (O). The atomic ratio O/Si of O to Si in the lithium silicate is, for example, greater than 2 and less than 4. When the O/Si ratio is greater than 2 and less than 4 (z in the below-described formula satisfies 0 < z < 2), it is advantageous in the stability and the lithium ion conductivity of the silicate phase. The O/Si ratio is preferably greater than 2 and less than 3. The atomic ratio Li/Si of Li to Si in the lithium silicate is, for example, greater than 0 and less than 4.

The composition of the lithium silicate can be represented by a formula: Li_{2z}SiO_{2+z} where 0 < z < 2. In view of the stability, the ease of production, and the lithium ion conductivity, 0 < z < 1 is preferred, and z = 1/2 is more preferred. A lithium silicate satisfying z = 1/2 can be represented by Li₂Si₂O₅. The lithium silicate desirably contains Li₂Si₂O₅ as a major component, and desirably, Li₂Si₂O₅ is a major component of the whole silicate phase. Herein, the "major component" refers to a component that occupies 50% or more by mass of the whole lithium silicate or the whole silicate phase, and may occupy 70% or more by mass.

The silicate phase can further contain another element M, in addition to Li, Si, and O. When the silicate phase contains the element M, the chemical stability and the lithium ion conductivity of the silicate phase are improved, or the side reaction due to contact between the silicate phase and the non-aqueous electrolyte is suppressed.

The element M may be at least one selected from the group consisting of, for example, sodium (Na), potassium (K), magnesium (Mg), barium (Ba), zirconium (Zr), niobium (Nb), a lanthanoid element such as lantern (La), tantalum (Ta), vanadium (V), titanium (Ti), phosphorus (P), bismuth (Bi), zinc (Zn), tin (Sn), lead (Pb), antimony (Sb), cobalt (Co), fluorine (F), tungsten (W), aluminum (Al), and boron (B). In view of the chemical resistance to non-aqueous electrolyte and the structural stability of the silicate phase, the element M preferably includes at least one selected from the group consisting of Zr, Ti, P, Al, and B.

The lanthanoid element can improve the charge-discharge efficiency in the early stage of charge-discharge cycles. In view of improving the lithium ion conductivity, in particular, the lanthanoid element more preferably includes La. The proportion of La in the total lanthanoid elements is preferably 90 atom% or more and 100 atom% or less.

The silicate phase may further contain a very small amount of iron (Fe), chromium (Cr), nickel (Ni), manganese (Mn), copper (Cu), molybdenum (Mo), or other elements.

The element M may be forming a compound. The compound may be, for example, a silicate of the element M, or an oxide of the element M, depending on the kind of the element M.

In the silicate phase, the content of the element M is, for example, 1 mol% or more and 40 mol% or less, relative to the total amount of the elements other than oxygen.

The contents of Li, Si, and the element M in the silicate phase can be measured, for example, by analyzing a cross section of the negative electrode mixture layer.

First, the battery in a fully discharged state is disassembled, to take out the negative electrode, and the negative electrode is washed with anhydrous ethyl methyl carbonate or dimethyl carbonate, to remove the non-aqueous electrolyte component, and dried. This is followed by processing with a cross section polisher (CP) to obtain a cross section of the negative electrode mixture layer. Next, a scanning electron microscope (SEM) is used to observe the cross section of the negative electrode mixture layer.

The content of each element can be then determined by any of the following methods. From the content of each element, the composition of the silicate phase can be calculated.

### <EDX>

From a cross-sectional backscattered electron image of the negative electrode mixture layer, 10 composite particles having a maximum diameter of 5 µm or more are randomly selected, to perform an elemental mapping analysis by energy dispersive X-ray (EDX) on each particle. The area occupied by the target element is calculated using an image analysis software. The observation magnification is desirably 2000 to 20,000 times. The measured values of the area occupied by the predetermined element contained in the 10 particles are averaged. From the obtained average value, the content of the target element can be calculated.

Desirable cross-sectional SEM-EDX analysis measurement conditions are shown below.

### <SEM-EDX measurement conditions>

Processing apparatus: SM-09010 (Cross Section Polisher) available from JEOL
Processing conditions: accelerating voltage 6 kV
Current value: 140 µA
Degree of vacuum: 1×10⁻³ to 2×10⁻³ Pa
Measuring apparatus: Electron microscope SU-70 available from HITACHI
Acceleration voltage during analysis: 10 kV
Field: Free mode
Probe current mode: Medium
Probe current range: High
Anode Ap.: 3
OBJ Ap.: 2
Analysis area: 1 µm square
Analysis software: EDAX Genesis
CPS: 20,500
Lsec: 50
Time constant: 3.2

### <AES>

From a cross-sectional backscattered electron image of the negative electrode mixture layer, 10 composite particles having a maximum diameter of 5 µm or more are randomly selected, to perform a qualitative/quantitative analysis on each particle using an Auger electron spectroscopy (AES) analyzer (e.g., JAMP-9510F, available from JEOL Corporation). The measurement conditions may be set, for example, the acceleration voltage to be 10 kV, the beam current to be 10 nA, and the analysis region to be 20 µmϕ. The contents of a predetermined element contained in the 10 particles are averaged, to determine its content.

The EDX and AES analyses are performed within 1 µm or more inward from the peripheral edge of the cross section of the composite particle.

### <ICP>

A sample of the composite particles is completely dissolved in a heated acid solution (a mixed acid of hydrofluoric acid, nitric acid, and sulfuric acid), and the residue of dissolution, carbon, is removed by filtration. Then, the obtained filtrate is analyzed by inductively coupled plasma emission spectroscopy (ICP), to measure a spectral intensity of each element. Subsequently, using a commercially available standard solution of the element, a calibration curve is drawn, from which the content of each element in the composite particles is calculated.

Other techniques can be used for quantification of each element, such as electron microanalyzer (EPMA), laser ablation ICP mass analysis (LA-ICP-MS), and X-ray photoelectron spectroscopy (XPS).

The contents of B, Na, K, and Al in the composite particles can be quantitatively analyzed in accordance with JIS R3105 (1995) (method for chemical analysis of borosilicate glass).

The carbon content in the composite particles may be measured using a carbon/sulfur analyzer (e.g., EMIA-520 available from HORIBA, Ltd.). A sample is weighed out on a magnetic board, to which an auxiliary agent is added. The sample is inserted into a combustion furnace (carrier gas: oxygen) heated to 1350 °C. The amount of carbon dioxide gas generated during combustion is detected by infrared absorption spectroscopy. A calibration curve is obtained using carbon steel (carbon content: 0.49%) available from Bureau of Analysed Samples. Ltd., from which a carbon content in the sample is determined (a high-frequency induction heating furnace combustion and infrared absorption method).

The oxygen content in the composite particles may be measured using an oxygen/nitrogen/hydrogen analyzer (e.g., EGMA-830, available from HORIBA, Ltd.). A sample is placed in a Ni capsule, which is put together with Sn pellets and Ni pellets serving as a flux, into a carbon crucible heated at a power of 5.75 kW, to detect a released carbon monoxide gas. From a calibration curve obtained using a standard sample Y₂O₃, an oxygen content in the sample is determined (an inert gas melting and non-dispersive infrared absorption method).

In the composite particles, a silicate phase, a silicon phase, and a SiO₂ phase are present. The Si content obtained by the above method is the sum of the amount of Si constituting the silicon phase, the amount of Si in the silicate phase, and the amount of Si in the SiO₂ phase. On the other hand, the amount of Si constituting the silicon phase can be separately determined by Si-NMR. The amount of Si in the SiO₂ phase can also be separately determined by Si-NMR. Therefore, by using Si-NMR, the amount of Si constituting the silicon phase, the amount of Si in the SiO₂ phase, and the amount of Si in the silicate phase can be distinguished and determined. For a standard material necessary for quantification, a mixture containing a silicate phase whose Si content is already-known, a silicon phase, and a SiO₂ phase in a predetermined ratio is used.

The content of the SiO₂ phase in the composite particles, as measured by Si-NMR, is, for example, less than 50% by mass, and may be 10 mass% or more and 40 mass% or less.

Desirable Si-NMR measurement conditions are shown below.

### <Si-NMR measurement conditions>

Measuring apparatus: Solid nuclear magnetic resonance spectrometer (INOVA-400), available from Varian, Inc.
Probe: Varian 7 mm CPMAS-2
MAS: 4.2 kHz
MAS speed: 4 kHz
Pulse: DD (45° pulse + signal capture time 1H decoupling)
Repetition time: 1200 sec to 3000 sec
Observation width: 100 kHz
Observation center: around -100 ppm
Signal capture time: 0.05 sec
Accumulated number of times: 560
Sample amount: 207.6 mg

### <Silicon phase>

The silicon phase is a phase of elementary silicon (Si), and repeatedly absorbs and releases lithium ions thereinto and therefrom during charge and discharge of the battery. The capacity develops through the Faradaic reaction in which the silicon phase is involved. The silicon phase, due to its large capacity, undergoes a great degree of expansion and contraction during charge and discharge. However, since the silicon phase is dispersed in the silicate phase, the stress due to the expansion and contraction of the silicon phase is relaxed.

The silicon phase can be constituted of a plurality of crystallites. The crystallite size of the silicon phase is preferably 30 nm or less. When the crystallite size of the silicon phase is 30 nm or less, the changes in volume of the silicon phase associated with expansion and contraction during charge and discharge can be reduced, and the cycle characteristics can be further improved. For example, the isolation of a silicon phase caused by the formation of gaps around the silicon phase due to contraction of the silicon phase can be suppressed, and the reduction in the charge-discharge efficiency can be suppressed. The lower limit of the crystallite size of the silicon phase is not limited, but is, for example, 1 nm or more.

The crystallite size of the silicon phase is more preferably 20 nm or less. In this case, the expansion and the contraction of the silicon phase can be easily made uniform, the stress generated in the composite particles tend to be relaxed, and the cycle characteristics tend to be improved.

The crystallite size of the silicon phase is more preferably 10 nm or less, particularly preferably 2 nm or more and 10 nm less. When silicon particles with an average particle diameter of 200 nm or less are used as a raw material silicon in a later-described second step, a composite material obtained in the second step can have a large specific surface area, and during heating in a later-described third step (or fifth step), heat is easily transferred to the silicon phase and the SiO₂ phase which are dispersed in the lithium silicate phase. As a result, a crystalline silicon phase with a crystallite size of 10 nm or less is formed, and quartz and β-cristobalite are both easily formed as a crystalline phase of SiO₂.

The crystallite size of the silicon phase is calculated from the Scherrer formula, using a half-width of a diffraction peak attributed to the Si (111) plane of the silicon phase in an XRD pattern of the composite particles. The XRD pattern is obtained by XRD measurement using Kα ray of Cu.

The silicon phase in the composite particles contained in the battery before initial charge is, for example, particulate. The average particle diameter of the particulate silicon phases is preferably 500 nm or less, more preferably 200 nm or less, furthermore preferably 100 nm or less, particularly preferably 50 nm or less. When fine particles of silicon with an average particle diameter of 200 nm or less are used as a raw material silicon in the later-described second step, the average particle diameter of the finally obtained silicon phases can be 100 nm or less. After initial charge, the average particle diameter of the silicon phases is preferably 400 nm or less, more preferably 100 nm or less. By using finer silicon phases, the changes in volume of the composite particles during charge and discharge are reduced, and the structural stability of the composite particles can be further improved. The average particle diameter of the silicon phases is measured using a cross-sectional SEM image of a composite particle. Specifically, the average particle diameter of the silicon phases is obtained by averaging the maximum diameters of 100 randomly-selected silicon phases.

In view of achieving a higher capacity, the content of the silicon phase in the composite particles is preferably 30 mass% or more, more preferably 35 mass% or more, further more preferably 55 mass% or more. In this case, the diffusibility of lithium ions is favorable, and excellent load characteristics can be obtained. On the other hand, in view of improving the cycle characteristics, the content of the silicon phase in the composite particles is preferably 95 mass% or less, more preferably 75 mass% or less, further more preferably 70 mass% or less. In this case, the exposed surface of the silicon phase without being covered with the silicate phase decreases, and the reaction between the non-aqueous electrolyte and the silicon phase tends to be suppressed.

### (Conductive layer)

A conductive layer containing a conductive material may be formed on at least part of the surface of the composite particles (secondary particles). This can dramatically increase the conductivity of the composite particles. The thickness of the conductive layer is preferably practically so small as not to influence the average particle diameter of the composite particles. In view of reliable conductivity and diffusibility of lithium ions, the thickness of the conductive layer is preferably 1 to 200 nm, more preferably 5 to 100 nm. The thickness of the conductive layer can be measured by cross-sectional observation of the composite particles using a SEM or TEM.

The conductive material is preferably a conductive carbon material. Examples of the conductive carbon material include an amorphous carbon, graphite, graphitizable carbon (soft carbon), and non-graphitizable carbon (hard carbon). In particular, an amorphous carbon is preferred in that a thin conductive layer covering the surface of the composite particles can be easily formed. Examples of the amorphous carbon includes carbon black, calcined pitch, coke, and activated carbon. Examples of the graphite includes natural graphite, artificial graphite, and graphitized mesophase carbon.

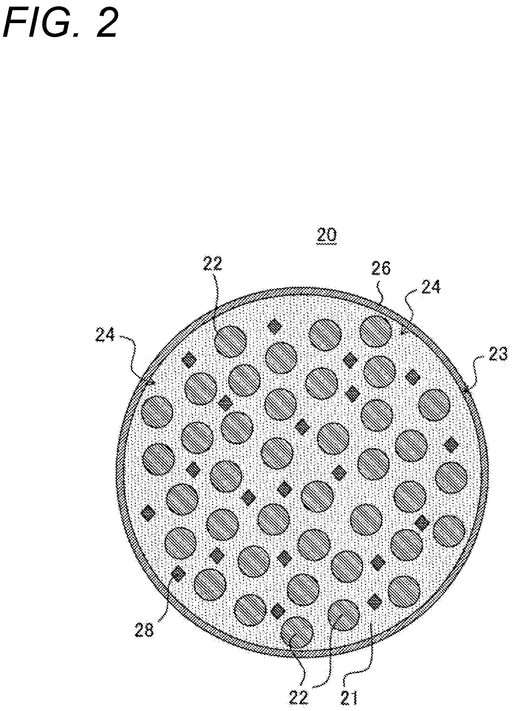

Here, FIG. 2 is a schematic cross-sectional view of a negative electrode active material (composite particles) according to one embodiment of the present invention.

A composite particle 20 includes a base particle 23 comprising a secondary particle formed of a plurality of primary particles 24 aggregated together. The base particle 23 (primary particle 24) includes a lithium silicate phase 21, and silicon phases 22 and SiO₂ crystalline phases 28 dispersed in the lithium silicate phase 21. The base particle 23 has a sea-island structure in which fine silicon phases and SiO₂ phases are dispersed in a matrix of the lithium silicate phase 21.

At least part of the surface of the base particle 23 can be covered with a conductive layer 26. The lithium silicate phase 21 may contain an element M. With repeated charge and discharge, the particulate silicon phases 22 adjacent to each other are connected with each other, to form a network of silicon phases.

### [Method for producing composite particles having conductive layer]

The composite particles are produced by, for example, a production method including the following first to fourth steps.
(First step) A step of obtaining a lithium silicate which is a raw material (hereinafter sometimes referred to as a raw material silicate). The raw material silicate includes SiO₂.
(Second step) A step of mixing the raw material silicate and a raw material silicon, and pulverizing the mixture in a ball mill or the like (forming into a composite material).
(Third step) A step of heating under compression the composite material (pulverized material), to obtain a sintered body.
(Fourth step) A step of crushing the sintered body, to obtain composite particles.

In the first step, a mixture of SiO₂ and a Li compound is used as a raw material, and SiO₂ not having reacted with the Li compound in the process of producing a raw material silicate can remain in the raw material silicate. When SiO₂ is used in a larger amount than the Li compound, SiO₂ tends to remain.

Although most of the SiO₂ remaining in the raw silicate in the second step is amorphous, a subsequent heating in the third step (or in the later-described fifth step) allows fine SiO₂ crystals to deposit. In other words, fine crystalline phases of SiO₂ can be dispersed in the lithium silicate phase. The crystalline phases of SiO₂ are stable so that they do not play a key role in the irreversible reaction by reacting with lithium ions even during charge, and are fine in size so that they are unlikely to inhibit the expansion and contraction of the silicon phase.

By adjusting the particle size (average particle diameter) of the raw material silicon used in the second step and/or the heating temperature or the degree of compression in the third step, β-cristobalite and quartz can be deposited in a mixed state, as a SiO₂ crystal. Also, the balance between β-cristobalite and quartz can also be controlled. By adjusting the particle size of the raw material silicon, the ease of heat transfer to the SiO₂ phase dispersed in the lithium silicate phase during heating in the third step can be adjusted. As the raw material silicon, for example, fine silicon particles as described below are used. The temperature of heating the composite material is, for example, 450 °C or higher and 1000 °C or lower. The pressure applied to the composite material is, for example, 100 MPa or more and 400 MPa or less. The time for heating and compressing the composite material is, for example, 1 hour or more and 10 hours or less.

The above manufacturing method may further include a fifth step of forming a conductive layer on at least part of the surface of the composite particles. The heat treatment in the fifth step may be utilized to allow β-cristobalite and quartz to be co-present, and to adjust the balance between β-cristobalite and quartz.

In the following, each step of the composite particle manufacturing method is specifically described.

### (First step)

The first step includes: for example, a step 1a of mixing silicon dioxide, a lithium compound, and, as needed, a compound containing an element M, to obtain a mixture; and a step 1b of baking the mixture, to obtain a raw material silicate. The baking in the step 1b is performed, for example, in an oxidizing atmosphere. The baking temperature in the step 1b is preferably 400 °C or higher and 1200 °C or lower, more preferably 800 °C or higher and 1100 °C or lower.

As the lithium compound, lithium carbonate, lithium oxide, lithium hydroxide, lithium hydride, and the like can be used. The lithium compound may be used singly or in combination of two or more kinds.

As the compound containing an element M, an oxide, hydroxide, hydride, halide, carbonate, oxalate, nitrate, sulfate, and the like of the element M can be used. The compound containing an element M may be used singly or in combination of two or more kinds.

### (Second step)

The second step has, for example, a step of pulverizing a mixture of the lithium silicate and a raw material silicon while applying a shearing force to the mixture, to obtain a fine-grained pulverized material (composite material). Here, for example, the raw material silicate and a raw material silicon are mixed in a predetermined mass ratio (e.g., 20:80 to 95:5), and the mixture is pulverized into fine particles while being stirred, using a pulverizer like a ball mill.

As the raw material silicon, fine particles of silicon are preferably used. The average particle diameter of the silicon fine particles is, for example, 500 nm or less, may be 200 nm or less, and may be 150 nm or less. The lower limit of the average particle diameter of the silicon fine particles is, for example, 10 nm. When the above fine silicon particles (esp., those with an average particle diameter of 200 nm or less) are used, the specific surface area of the composite material obtained in the second step is increased, facilitating the heat transfer to the SiO₂ phase dispersed in the lithium silicate phase during heating in the third step (or fifth step). Therefore, the crystallinity of the SiO₂ phase can be easily improved, and the composite material can be easily heated to a temperature at which β-cristobalite is formed together with quartz. In the case of using the above fine silicon particles, the crystallite size of the silicon phase in the finally obtained composite particles can be less than 10 nm (or 2 nm or more and 10 nm or less). The average particle diameter of the raw material silicon means a particle diameter (volume average particle diameter) at 50% cumulative volume in a particle size distribution measured by a laser diffraction scattering method.

### (Third step)

Sintering of the composite material is performed for the purpose of producing dense composite particles, thereby to reduce the surface area of the composite particles to a moderate degree. In the third step, for example, the pulverized material (composite material) is heated while being compressed with a hot press machine or the like, to obtain a sintered body. Alternatively, the pulverized material molded into a sheet shape may be passed between a pair of heated rolls, and rolled, to obtain a sintered body. The third step is performed, for example, in an inert atmosphere (e.g., in an atmosphere of argon, nitrogen, etc.).

The heating temperature in the third step may be 450 °C or higher and 1000 °C or lower. In the above temperature range, fine silicon particles and SiO₂ particles can be easily dispersed in the silicate phase with low crystallinity. The raw material silicate is stable in the above temperature range, and hardly reacts with silicon. The heating time is, for example, 1 hour or more and 10 hours or less.

### (Fourth step)

In the fourth step, the sintered body is crushed to have a desired particle size distribution, to obtain composite particles (secondary particles) containing a silicate phase, and a silicon phase and a SiO₂ phase dispersed in the silicate phase. The composite particles are pulverized to have an average particle diameter of, for example, 1 to 25 µm.

### (Fifth step)

At least part of the surface of the composite particles (secondary particles) may be covered with a conductive material, to form a conductive layer. The conductive material is preferably electrochemically stable, and is preferably a conductive carbon material. Examples of the method of covering the surface of the composite particles with a conductive carbon material include: a CVD method using a hydrocarbon gas, such as acetylene and methane, as a raw material; and a method in which coal pitch, petroleum pitch, phenolic resin, or the like is mixed with the composite particles and heated, to be carbonized. Alternatively, carbon black may be allowed to adhere to the surface of the composite particles. In the fifth step, for example, a mixture of the composite particles and a conductive carbon material may be heated at a temperature of 700 °C or higher and 950 °C or lower in an inert atmosphere (e.g., an atmosphere of argon, nitrogen, etc.), thereby to form a conductive layer on the surface of the composite particles.

### [Non-aqueous electrolyte secondary battery]

A non-aqueous electrolyte secondary battery according to an embodiment of the present invention has a positive electrode, a negative electrode, and a non-aqueous electrolyte. The negative electrode includes the above-described negative electrode active material for a non-aqueous electrolyte secondary battery.

A detailed description of the non-aqueous electrolyte secondary battery will be given below.

### [Negative electrode]

The negative electrode may have a negative electrode current collector, and a negative electrode mixture layer supported on a surface of the negative electrode current collector. The negative electrode mixture layer can be formed by applying a negative electrode slurry of a negative electrode mixture dispersed in a dispersion medium, onto a surface of the negative electrode current collector, followed by drying. The dry applied film may be rolled as needed. The negative electrode mixture layer may be formed on a surface on one side or both sides of the negative electrode current collector.

The negative electrode mixture contains a negative electrode active material as an essential component, and can contain a binder, a conductive agent, a thickener, and the like as optional components. The negative electrode active material contains at least the above-described composite particles.

The negative electrode active material preferably further includes a carbon material that electrochemically absorbs and releases lithium ions. The composite particles expand and contract in volume associated with charge and discharge. Therefore, increasing the proportion thereof in the negative electrode active material can increase the risk of a contact failure to occur associated with charge and discharge, between the negative electrode active material and the negative electrode current collector. However, by using the composite particles in combination with a carbon material, it becomes possible to achieve excellent cycle characteristics while imparting a high capacity of the silicon particles to the negative electrode. In view of achieving a higher capacity and improved cycle characteristics, the proportion of the carbon material in the sum of the composite particles and the carbon material is preferably 98 mass% or less, more preferably 70 mass% or more and 98 mass% or less, further more preferably 75 mass% or more and 95 mass% or less.

Examples of the carbon material include graphite, graphitizable carbon (soft carbon), and non-graphitizable carbon (hard carbon). In particular, preferred is graphite, in terms of its excellent stability during charge and discharge and small irreversible capacity. The graphite means a material having a graphite-like crystal structure, examples of which include natural graphite, artificial graphite, and graphitized mesophase carbon particles. The carbon material may be used singly or in combination of two or more kinds.

Examples of the negative electrode current collector include a non-porous conductive substrate (e.g., metal foil) and a porous conductive substrate (e.g., mesh, net, punched sheet). The negative electrode current collector may be made of, for example, stainless steel, nickel, a nickel alloy, copper, or a copper alloy. The negative electrode current collector may have any thickness. In view of the balance between high strength and lightweight of the negative electrode, the thickness is preferably 1 to 50 µm, more preferably 5 to 20 µm.

The binder may be a resin material, examples of which include: fluorocarbon resin, such as polytetrafluoroethylene and polyvinylidene fluoride (PVDF); polyolefin resin, such as polyethylene and polypropylene; polyamide resin, such as aramid resin; polyimide resin, such as polyimide and polyamide-imide; acrylic resin, such as polyacrylic acid, methyl polyacrylate, and ethylene-acrylic acid copolymer; vinyl resin, such as polyacrylonitrile and polyvinyl acetate; polyvinyl pyrrolidone; polyether sulfone; and a rubbery material, such as styrene-butadiene copolymer rubber (SBR). The binder may be used singly or in combination of two or more kinds.

Examples of the conductive agent include: carbons, such as acetylene black; conductive fibers, such as carbon fibers and metal fibers; fluorinated carbon; metal powders, such as aluminum; conductive whiskers, such as zinc oxide and potassium titanate; conductive metal oxides, such as titanium oxide; and organic conductive materials, such as phenylene derivatives. The conductive agent may be used singly or in combination of two or more kinds.

Examples of the thickener include: cellulose derivatives (e.g., cellulose ethers), such as carboxymethyl cellulose (CMC) and modified products thereof (including salts such as Na salts), and methyl cellulose; saponificated products of polymers having vinyl acetate units, such as polyvinyl alcohol; and polyethers (e.g., polyalkylene oxide, such as polyethylene oxide). The thickener may be used singly or in combination of two or more kinds.

Examples of the dispersion medium include: water; alcohols, such as ethanol; ethers, such as tetrahydrofuran; amides, such as dimethylformamide; N-methyl-2-pyrrolidone (NMP); and a mixed solvent of these.

### [Positive electrode]

The positive electrode may include a positive electrode current collector, and a positive electrode mixture layer supported on a surface of the positive electrode current collector. The positive electrode mixture layer can be formed by applying a positive electrode slurry of a positive electrode mixture dispersed in a dispersion medium, onto a surface of the positive electrode current collector, followed by drying. The dry applied film may be rolled as needed. The positive electrode mixture layer may be formed on a surface on one side or both sides of the positive electrode current collector. The positive electrode mixture contains a positive electrode active material as an essential component, and can contain a binder, a conductive agent, and the like as optional components. The dispersion medium of the positive electrode slurry may be NMP or the like.

The positive electrode active material may be, for example, a lithium-containing composite oxide. Examples thereof include LiₐCoO₂, LiₐNiO₂, LiₐMnO₂, LiₐCo_{b}Ni_{1-b}O₂, LiₐCo_{b}Me_{1-b}O_{c}, LiₐNi_{1-b}Me_{b}O_{c}, LiₐMn₂O₄, LiₐMn_{2-b}Me_{b}O₄, LiMePO₄, and Li₂MePO₄F, where Me is at least one selected from the group consisting of Na, Mg, Sc, Y, Mn, Fe, Co, Ni, Cu, Zn, Al, Cr, Pb, Sb, and B. Here, a = 0 to 1.2, b = 0 to 0.9, and c = 2.0 to 2.3. The value a representing the molar ratio of lithium is subjected to increase and decrease during charge and discharge.

In particular, preferred is a lithium-nickel composite oxide represented by LiₐNi_{b}Me_{1-b}O₂, where Me is at least one selected from the group consisting of Mn, Co, and Al, 0 < a ≤ 1.2, and 0.3 ≤ b ≤ 1. In view of achieving a higher capacity, preferably, 0.85 ≤ b < 1. In view of the stability of the crystal structure, more preferred is LiₐNi_{b}Co_{c}Al_{d}O₂ containing Co and Al as elements represented by Me, where 0 < a ≤ 1.2, 0.85 ≤ b < 1, 0 < c < 0.15, 0 < d ≤ 0.1, and b+c+d = 1.

The binder and the conductive agent may be like those exemplified for the negative electrode. The conductive agent may be graphite, such as natural graphite and artificial graphite.

The form and the thickness of the positive electrode current collector may be respectively selected from the forms and the ranges corresponding to those of the negative electrode current collector. The positive electrode current collector may be made of, for example, stainless steel, aluminum, an aluminum alloy, or titanium.

### [Non-aqueous electrolyte]

The non-aqueous electrolyte contains a non-aqueous solvent, and a lithium salt dissolved in the non-aqueous solvent. The concentration of the lithium salt in the non-aqueous electrolyte is preferably, for example, 0.5 mol/L or more and 2 mol/L or less. By controlling the lithium salt concentration within the above range, a non-aqueous electrolyte having excellent ion conductivity and moderate viscosity can be obtained. The lithium salt concentration, however, is not limited to the above.

Examples of the non-aqueous solvent include cyclic carbonic acid esters, chain carbonic acid esters, cyclic carboxylic acid esters, and chain carboxylic acid esters. The cyclic carbonic acid esters are exemplified by propylene carbonate (PC) and ethylene carbonate (EC). The chain carbonic acid esters are exemplified by diethyl carbonate (DEC), ethyl methyl carbonate (EMC), and dimethyl carbonate (DMC). The cyclic carboxylic acid esters are exemplified by γ-butyrolactone (GBL) and γ-valerolactone (GVL). The chain carboxylic acid esters are exemplified by methyl formate, ethyl formate, propyl formate, methyl acetate, ethyl acetate, propyl acetate, methyl propionate, ethyl propionate, and propyl propionate. The non-aqueous solvent may be used singly or in combination of two or more kinds.

Examples of the lithium salt include: LiClO₄, LiBF₄, LiPF₆, LiAlCl₄, LiSbF₆, LiSCN, LiCF₃SO₃, LiCF₃CO₂, LiAsF₆, LiB₁₀Cl₁₀, lithium lower aliphatic carboxylate, LiCl, LiBr, LiI, borates, and imides. Examples of the borates include lithium bis(1,2-benzenediolate(2-)-O,O') borate, lithium bis(2,3-naphthalenediolate(2-)-O,O') borate, lithium bis(2,2'-biphenyldiolate(2-)-O,O') borate, and lithium bis(5-fluoro-2-olate-1-benzenesulfonate-O,O') borate. Examples of the imides include lithium bisfluorosulfonyl imide (LiN(FSO₂)₂), lithium bis(trifluoromethanesulfonyl)imide (LiN(CF₃SO₂)₂), lithium trifluoromethanesulfonyl nonafluorobutanesulfonyl imide (LiN(CF₃SO₂)(C₄F₉SO₂)), and lithium bis(pentafluoroethanesulfonyl)imide (LiN(C₂F₅SO₂)₂). Preferred among them is LiPF₆. The lithium salt may be used singly or in combination of two or more kinds.

### [Separator]

Usually, it is desirable to interpose a separator between the positive electrode and the negative electrode. The separator is excellent in ion permeability and has moderate mechanical strength and electrically insulating properties. The separator may be, for example, a microporous thin film, a woven fabric, or a nonwoven fabric. The separator is preferably made of, for example, polyolefin, such as polypropylene or polyethylene.

In an exemplary structure of the non-aqueous electrolyte secondary battery, an electrode group formed by winding the positive electrode and the negative electrode with the separator interposed therebetween is housed together with the non-aqueous electrolyte in an outer body. The structure is not limited thereto, and a different form of electrode group may be adopted. For example, a stacked-type electrode group formed by stacking the positive electrode and the negative electrode with the separator interposed therebetween may be adopted. The non-aqueous electrolyte secondary battery may be in any form, such as cylindrical type, prismatic type, coin type, button type, or laminate type.

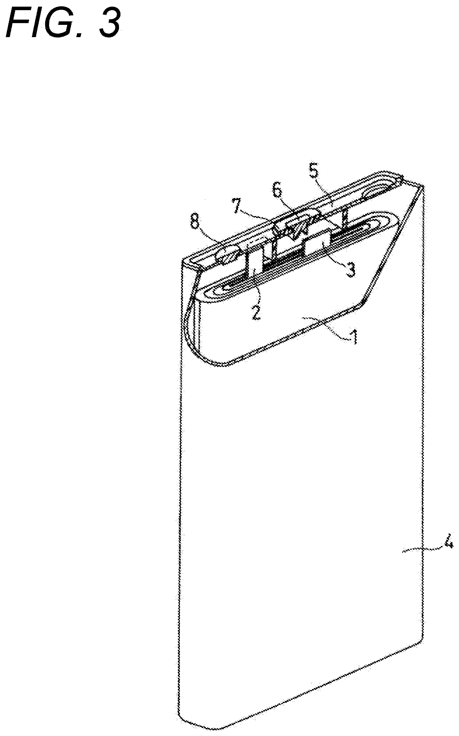

In the following, a structure of a prismatic non-aqueous electrolyte secondary battery which is an example of a non-aqueous electrolyte secondary battery according to the present invention will be described with reference to FIG. 3.

The battery includes a bottomed prismatic battery case 4, and an electrode group 1 and a non-aqueous electrolyte housed in the battery case 4. The electrode group 1 has a long negative electrode, a long positive electrode, and a separator interposed therebetween and preventing them from directly contacting with each other. The negative electrode current collector of the negative electrode is electrically connected, via a negative electrode lead 3, to a negative electrode terminal 6 provided at a sealing plate 5. The negative electrode terminal 6 is electrically insulated from the sealing plate 5 by a resin gasket 7. The positive electrode current collector of the positive electrode is electrically connected, via a positive electrode lead 2, to the back side of the sealing plate 5. In other words, the positive electrode is electrically connected to the battery case 4 serving as a positive electrode terminal. The sealing plate 5 is fitted at its periphery to the opening end of the battery case 4, and the fitted portion is laser-welded. The injection port for non-aqueous electrolyte is provided in the sealing plate 5 and is closed with a sealing plug 8 after injection.

The present invention will be specifically described below with reference to Examples and Comparative Examples. It is to be noted, however, the present invention is not limited to the following Examples.

### <Example 1>

### [Preparation of composite particles]

### (First step)

Lithium oxide, silicon dioxide, aluminum oxide, and lanthanum oxide were mixed in a molar ratio of Li₂O:SiO₂:Al₂O₃:La₂O₃ = 21:75:3:1. The mixture was allowed to melt at 1500 °C for 5 hours in an inert gas atmosphere. The melt was passed between metal rolls and formed into flakes, to give a lithium silicate composite oxide containing Li, Si, Al, and La. The resultant lithium silicate composite oxide was pulverized to have an average particle diameter of 10 µm, and thus, a raw material silicate was obtained.

### (Second step)

Next, the raw material silicate (average particle diameter: 10 µm) and a raw material silicon were mixed in a mass ratio of 40:60. The raw material silicon use here was a fine powder of silicon (3N, average particle diameter: 100 nm). The mixture was placed in a pot (made of SUS, volume: 500 mL) of a planetary ball mill (P-5, available from Fritsch Co., Ltd.), together with 24 SUS balls (diameter: 20 mm). In the pot with the lid closed, the mixture was pulverized at 200 rpm for 25 hours in an inert atmosphere.

### (Third step)

Next, the pulverized material (composite material) was heated in an inert atmosphere while being compressed with a hot press machine, to obtain a sintered body. The temperature of heating the pulverized material was set to 600 °C, the pressure applied to the pulverized material was set to 190 Ma, and the heating (compression) time was set to 4 hours.

### (Fourth step)

Next, the sintered body was then crushed, and passed through a 40-µm mesh, to give composite particles.

### (Fifth step)

The composite particles were mixed with coal pitch (MCP250, available from JFE Chemical Corporation). The mixture was baked at 800 °C for 5 hours in an inert atmosphere, to cover the surface of the composite particles with a conductive carbon, to form a conductive layer. The covering amount of the conductive layer was set to 5 mass%, relative to the total mass of the composite particles and the conductive layer. Then, using a sieve, composite particles a1 (secondary particles) with an average particle diameter of 5 µm having a conductive layer were obtained.

The composite particles a1 were subjected to XRD measurement. An XRD pattern of the composite particles a1 is shown in FIG 1. In the XRD pattern, peaks belonging to Si, SiO₂, and Li₂Si₂O₅ were confirmed. With respect to SiO₂, a peak attributed to quartz was observed around 2θ = 26.3°, and a peak attributed to β-cristobalite was observed around 2θ = 21.6°. A ratio I_{A}/I_{B} of an intensity I_{A} of the peak attributed to β-cristobalite to an intensity I_{B} of the peak attributed to quartz was 0.3. Furthermore, using the XRD pattern of the composite particles a1, the crystallite size of the silicon phase was determined by the already-described method. The crystallite size of the silicon phase was 8 nm.

### [Production of negative electrode]

The composite particles and graphite were mixed in a mass ratio of 5:95, and used as a negative electrode active material. To a negative electrode mixture containing the negative electrode active material, a Na salt of CMC, and SBR in a mass ratio of 97.5:1:1.5, water was added, and stirred, to prepare a negative electrode slurry. Next, the negative electrode slurry was applied onto a surface of a copper foil, and the applied film was dried, and then rolled, to produce a negative electrode with a negative electrode mixture layer having a density of 1.5 g/cm³ formed on both sides of the copper foil.

### [Production of positive electrode]

To a positive electrode mixture containing lithium cobaltate, acetylene black, and PVDF in a mass ratio of 95:2.5:2.5, NMP was added, and stirred, to prepare a positive electrode slurry. Next, the positive electrode slurry was applied onto a surface of an aluminum foil, and the applied film was dried, and then rolled, to produce a positive electrode with a positive electrode mixture layer having a density of 3.6 g/cm³ formed on both sides of the aluminum foil.

### [Preparation of non-aqueous electrolyte]

To a mixed solvent containing EC and DEC in a volume ratio of 3:7, LiPF₆ was dissolved at a concentration of 1.0 mol/L, to prepare a non-aqueous electrolyte.

### [Fabrication of non-aqueous electrolyte secondary battery]

The positive and negative electrodes, each with a tab attached, were wound with a separator interposed therebetween, thereby to form an electrode group with the tab positioned at the outermost layer. The electrode group was inserted into an outer body made of aluminum laminated film and dried under vacuum at 105 °C for 2 hours. Then, the non-aqueous electrolyte was injected, and the opening of the outer body was sealed. A battery A1 of Example 1 was thus fabricated.

### <Comparative Example 1>

Composite particles b1 were prepared in the same manner as in Example 1, except that a coarse powder of silicon (3N, average particle diameter: 10 µm) was used as the raw silicon in the second step.

The composite particles b1 were subjected to XRD measurement. An XRD pattern of the composite particles b1 is shown in FIG 1. In the XRD pattern, peaks belonging to Si, SiO₂, and Li₂Si₂O₅ were confirmed. Regarding SiO₂, a peak attributed to quartz was observed, but no peak attributed to β-cristobalite was observed.

A negative electrode was produced in the same manner as in Example 1, except that the composite particles b1 obtained above were used, and a non-aqueous electrolyte secondary battery B1 was fabricated.

The batteries of Example and Comparative Example were each evaluated for the following items.

### [Percentage change in thickness of negative electrode after initial charge]

At 25 °C, the battery was constant-current charged at a current of 1 It (800 mA) until the voltage reached 4.2 V, and then, constant-voltage charged at a voltage of 4.2 V until the current reached 1/20 It (40 mA).

The battery after initial charge was disassembled, and the negative electrode was taken out, then washed with ethyl methyl carbonate or dimethyl carbonate, and dried, to remove the electrolyte. Subsequently, the thickness of the negative electrode was measured at any 10 points, and the average of these measured values was determined as a thickness T1 of the negative electrode after initial charge. Also, the thickness of the above-fabricated negative electrode (the negative electrode used in the battery fabrication) was determined in the same manner as above, as a thickness T0 of the negative electrode before initial charge.

A ratio of the thickness T1 to the thickness T0 of the negative electrode before initial charge (T1/T0 × 100) was determined, as a percentage change in thickness of the negative electrode after initial charge.

### [Percentage change in thickness of negative electrode after initial discharge]

The battery was prepared separately, and at 25 °C, was constant-current charged at a current of 1 It (800 mA) until the voltage reached 4.2 V, and then constant-voltage charged at a voltage of 4.2 V until the current reached 1/20 It (40 mA). After a rest time of 10 minutes, the battery was constant-current discharged at a current of 1 It (800 mA) until the voltage reached 2.75 V.

The battery after initial discharge was disassembled, and a thickness T2 of the negative electrode after initial discharge was determined in the same manner as above. A ratio of the thickness T2 of the negative electrode after initial discharge to the thickness T0 of the negative electrode before initial charge (T2/T0 × 100) was determined, as a percentage change in thickness of the negative electrode after initial discharge.

### [Charge-discharge cycle test]

Charge and discharge were repeated under the following conditions.

### <Charge>

At 25 °C, a constant-current charge was performed at a current of 1 It (800 mA) until the voltage reached 4.2 V, and then, a constant-voltage charge was performed at a voltage of 4.2 V until the current reached 1/20 It (40 mA).

### <Discharge>

At 25 °C, a constant-current discharge was performed at a current of 1 It (800 mA) until the voltage reached 2.75 V.

The rest time between charge and discharge was set to 10 minutes. A ratio of the discharge capacity at the 300th cycle to the discharge capacity at the 1st cycle was determined as a capacity retention rate.

The evaluation results of the batteries A1 and B1 are shown in Table 1.

**[Table 1]**

| Battery | Composite particles | Percentage change in thickness of negative electrode (%) | | Capacity retention rate at 300th cycle (%) |
|---|---|---|---|---|
| | | after initial charge | after initial discharge | |
| A1 | a1 | 120.4 | 110.2 | 85.7 |
| B1 | b1 | 125.2 | 110.2 | 77.9 |

In the battery A1, in which β-cristobalite was contained together with quartz as the crystalline phase of silicon dioxide, the stress caused in the silicate phase due to expansion of the silicon phase was relaxed, and the percentage change in thickness of the negative electrode after initial charge was 5% lower than that in the battery B1. This resulted in a high capacity retention rate in the battery A1, which was 8% higher than that in the battery B1, showing a remarkable improvement in cycle characteristics.

### [Industrial Applicability]

The present invention can provide a non-aqueous electrolyte secondary battery having a high capacity and excellent charge-discharge cycle characteristics. The non-aqueous electrolyte secondary battery of the present invention is useful as a main power source for mobile communication devices, portable electronic devices, and other similar devices.

### [Reference Signs List]

- 1: electrode group
- 2: positive electrode lead
- 3: negative electrode lead
- 4: battery case
- 5: sealing plate
- 6: negative electrode terminal
- 7: gasket
- 8: sealing plug
- 20: composite particle
- 21: lithium silicate phase
- 22: silicon phase
- 23: base particle
- 24: primary particle
- 26: conductive layer
- 28: SiO₂ crystalline phase

## Claims

1. A negative electrode active material for a non-aqueous electrolyte secondary battery, comprising:
composite particles (20) containing
a lithium silicate phase (21),
a silicon phase (22) dispersed in the lithium silicate phase (21), and
a crystalline phase (28) of silicon dioxide dispersed in the lithium silicate phase (21), wherein
the crystalline phase (28) of silicon dioxide contains β-cristobalite and quartz, and
the silicon phase (22) has a crystallite size of 10 nm or less.

2. The negative electrode active material for a non-aqueous electrolyte secondary battery according to claim 1, wherein
in an X-ray diffraction pattem of the composite particles (20) obtained by X-ray diffractometry,
a peak attributed to the β-cristobalite appears around 2θ = 21.6°, and
a peak attributed to the quartz appears around 2θ = 26.3°.

3. The negative electrode active material for a non-aqueous electrolyte secondary battery according to claim 2, wherein in the X-ray diffraction pattern of the composite particles (20), a ratio I_{A}/I_{B} of an intensity I_{A} of the peak attributed to the β-cristobalite to an intensity I_{B} of the peak attributed to the quartz is 0.1 or more.

4. The negative electrode active material for a non-aqueous electrolyte secondary battery according to any one of claims 1 to 3, wherein the lithium silicate phase (21) contains Li₂Si₂O₅.

5. The negative electrode active material for a non-aqueous electrolyte secondary battery according to any one of claims 1 to 4, wherein the lithium silicate phase (21) contains at least one element selected from the group consisting of sodium, potassium, magnesium, barium, zirconium, niobium, a lanthanide element, tantalum, vanadium, titanium, phosphorus, bismuth, zinc, tin, lead, antimony, cobalt, fluorine, tungsten, aluminum, and boron.

6. A negative electrode active material for a non-aqueous electrolyte secondary battery comprising:
composite particles (20) containing
a lithium silicate phase (21),
a silicon phase (22) dispersed in the lithium silicate phase (21), and
a crystalline phase (28) of silicon dioxide dispersed in the lithium silicate phase (21), wherein
the crystalline phase (28) of silicon dioxide contains β-cristobalite and quartz, and
the lithium silicate phase (21) contains at least one element selected from the group consisting of sodium, potassium, magnesium, barium, zirconium, niobium, a lanthanide element, tantalum, vanadium, titanium, phosphorus, bismuth, zinc, tin, lead, antimony, cobalt, fluorine, tungsten, aluminum, and boron.

7. A non-aqueous electrolyte secondary battery, comprising:
a positive electrode; a negative electrode; and a non-aqueous electrolyte, wherein
the negative electrode includes the negative electrode active material for a non-aqueous electrolyte secondary battery of any one of claims 1 to 6.

## Patentansprüche

1. Negativelektroden-Aktivmaterial für eine Sekundärbatterie mit wasserfreiem Elektrolyt, umfassend:
Verbundpartikel (20), enthaltend
eine Lithiumsilikatphase (21),
eine Siliziumphase (22), die in der Lithiumsilikatphase (21) dispergiert ist, und
eine kristalline Phase (28) von Siliziumdioxid, die in der Lithiumsilikatphase (21) dispergiert ist, wobei
die kristalline Phase (28) von Siliziumdioxid β-Cristobalit und Quarz enthält, und
die Siliziumphase (22) eine Kristallitgröße von 10 nm oder kleiner aufweist.

2. Negativelektroden-Aktivmaterial für eine Sekundärbatterie mit wasserfreiem Elektrolyt nach Anspruch 1, wobei
in einem Röntgenbeugungsmuster der Verbundpartikel (20), das durch Röntgendiffraktometrie erhalten wird,
eine Spitze, die β-Cristobalit zugeordnet wird, um 2θ = 21,6° auftritt, und
eine Spitze, die Quarz zugeordnet wird, um 2θ = 26,3° auftritt.

3. Negativelektroden-Aktivmaterial für eine Sekundärbatterie mit wasserfreiem Elektrolyt nach Anspruch 2, wobei in dem Röntgenbeugungsmuster der Verbundpartikel (20) ein Verhältnis I_{A}/I_{B} einer Stärke I_{A} der Spitze, die dem β-Cristobalit zugeordnet wird, zu einer Stärke I_{B} der Spitze, die dem Quarz zugeordnet wird, 0,1 oder höher ist.

4. Negativelektroden-Aktivmaterial für eine Sekundärbatterie mit wasserfreiem Elektrolyt nach einem der Ansprüche 1 bis 3, wobei die Lithiumsilikatphase (21) Li₂Si₂O₅ enthält.

5. Negativelektroden-Aktivmaterial für eine Sekundärbatterie mit wasserfreiem Elektrolyt nach einem der Ansprüche 1 bis 4, wobei die Lithiumsilikatphase (21) mindestens ein Element enthält, das ausgewählt ist aus der Gruppe, die besteht aus Natrium, Kalium, Magnesium, Barium, Zirkonium, Niob, einem Lanthanoid, Tantal, Vanadium, Titan, Phosphor, Wismut, Zink, Zinn, Blei, Antimon, Kobalt, Fluor, Wolfram, Aluminium und Bor.

6. Negativelektroden-Aktivmaterial für eine Sekundärbatterie mit wasserfreiem Elektrolyt, umfassend:
Verbundpartikel (20), enthaltend
eine Lithiumsilikatphase (21),
eine Siliziumphase (22), die in der Lithiumsilikatphase (21) dispergiert ist, und
eine kristalline Phase (28) von Siliziumdioxid, die in der Lithiumsilikatphase (21) dispergiert ist, wobei
die kristalline Phase (28) von Siliziumdioxid β-Cristobalit und Quarz enthält, und
die Lithiumsilikatphase (21) mindestens ein Element enthält, das ausgewählt ist aus der Gruppe, die besteht aus Natrium, Kalium, Magnesium, Barium, Zirkonium, Niob, einem Lanthanoid, Tantal, Vanadium, Titan, Phosphor, Wismut, Zink, Zinn, Blei, Antimon, Kobalt, Fluor, Wolfram, Aluminium und Bor.

7. Sekundärbatterie mit wasserfreiem Elektrolyt, umfassend:
eine Positivelektrode; eine Negativelektrode; und einen Elektrolyten, wobei
die Negativelektrode das Negativelektroden-Aktivmaterial für eine Sekundärbatterie mit wasserfreiem Elektrolyt nach einem der Ansprüche 1 bis 6 umfasst.

## Revendications

1. Matériau actif d'électrode négative pour une batterie rechargeable à électrolyte non aqueux, comprenant :
des particules composites (20) contenant
une phase de silicate de lithium (21),
une phase de silicium (22) dispersée dans la phase de silicate de lithium (21), et
une phase cristalline (28) de dioxyde de silicium dispersée dans la phase de silicate de lithium (21),
dans lequel
la phase cristalline (28) de dioxyde de silicium contient de la β-cristobalite et du quartz, et
la phase de silicium (22) a une taille de cristallite de 10 nm ou moins.

2. Matériau actif d'électrode négative pour une batterie rechargeable à électrolyte non aqueux selon la revendication 1, dans lequel,
dans un motif de diffraction des rayons X des particules composites (20), obtenu par diffractométrie des rayons X,
un pic attribué à la β-cristobalite apparaît aux alentours de 2θ = 21,6°, et
un pic attribué au quartz apparaît aux alentours de 2θ = 26,3°.

3. Matériau actif d'électrode négative pour une batterie rechargeable à électrolyte non aqueux selon la revendication 2, dans lequel, dans le motif de diffraction des rayons X des particules composites (20), le rapport I_{A}/I_{B} de l'intensité I_{A} du pic attribué à la β-cristobalite à l'intensité I_{B} du pic attribué au quartz est de 0,1 ou plus.

4. Matériau actif d'électrode négative pour une batterie rechargeable à électrolyte non aqueux selon l'une quelconque des revendications 1 à 3, dans lequel la phase de silicate de lithium (21) contient Li₂Si₂O₅.

5. Matériau actif d'électrode négative pour une batterie rechargeable à électrolyte non aqueux selon l'une quelconque des revendications 1 à 4, dans lequel la phase de silicate de lithium (21) contient au moins un élément choisi dans le groupe constitué par le sodium, le potassium, le magnésium, le baryum, le zirconium, le niobium, un élément lanthanide, le tantale, le vanadium, le titane, le phosphore, le bismuth, le zinc, l'étain, le plomb, l'antimoine, le cobalt, le fluor, le tungstène, l'aluminium, et le bore.

6. Matériau actif d'électrode négative pour une batterie rechargeable à électrolyte non aqueux comprenant :
des particules composites (20) contenant
une phase de silicate de lithium (21),
une phase de silicium (22) dispersée dans la phase de silicate de lithium (21), et
une phase cristalline (28) de dioxyde de silicium dispersée dans la phase de silicate de lithium (21),
dans lequel
la phase cristalline (28) de dioxyde de silicium contient de la β-cristobalite et du quartz, et
la phase de silicate de lithium (21) contient au moins un élément choisi dans le groupe constitué par le sodium ; le potassium, le magnésium, le baryum, le zirconium, le niobium, un élément lanthanide, le tantale, le vanadium, le titane, le phosphore, le bismuth, le zinc, l'étain, le plomb, l'antimoine, le cobalt, le fluor, le tungstène, l'aluminium, et le bore.

7. Batterie rechargeable à électrolyte non aqueux comprenant :
une électrode positive ; une électrode négative ; et un électrolyte non aqueux,
dans laquelle l'électrode négative inclut le matériau actif d'électrode négative pour une batterie rechargeable à électrolyte non aqueux de l'une quelconque des revendications 1 à 6.
